# EUROPÄISCHE PATENTSCHRIFT

(11) **EP 2 903 861 B1**
(45) Veröffentlichungstag und Bekanntmachung des Hinweises auf die Patenterteilung: **19.02.2020**
(21) Anmeldenummer: 13773179.0
(22) Anmeldetag: 19.09.2013
(51) Int. Cl.: B60P 7/08

(54) **HALTENETZ ZUR MONTAGE AN EINER BEFESTIGUNGSFLÄCHE**
RETAINING NET FOR INSTALLATION ON A FASTENING SURFACE
FILET DE RETENUE POUR LE MONTAGE SUR UNE SURFACE DE FIXATION

(30) Priorität: 05.10.2012 DE 202012009544 U
(43) Veröffentlichungstag der Anmeldung: 12.08.2015
(73) Patentinhaber: Nölle-Pepin GmbH & Co. KG., 58332 Schwelm (DE)
(72) Erfinder: EMDE, Mark, 58256 Ennepetal (DE)
(74) Vertreter: Lelgemann, Karl-Heinz
(86) Internationale Anmeldenummer: PCT/EP2013/002825
(87) Internationale Veröffentlichungsnummer: WO 2014/053219

(56) Entgegenhaltungen:
- WO-A1-02/062619
- US-A1- 2002 067 972
- US-A1- 2003 123 946

## Beschreibung

Die Erfindung bezieht sich auf ein Haltenetz zur Montage an einer Befestigungsfläche, mit einem elastischen Netzteil, dessen Netzmaschen durch zueinander geneigt verlaufende, jeweils mehrere Netzstränge aufweisende Strangscharen gebildet sind. Ein derartiges Haltenetz ist aus der US 2003/123946 A1 bekannt.

Bei bekannten derartigen Haltenetzen tritt bei den an den Befestigungsflächen montierten elastischen Netzteilen der Effekt auf, dass in der Fläche des Netzteils ein ungleichmäßiges Netzmaschenbild entsteht und in Randbereichen des Netzteils ein Durchhang auftritt.

Ausgehend von dem vorstehend geschilderten Stand der Technik liegt der Erfindung die Aufgabe zugrunde, ein Haltenetz zur Montage an einer Befestigungsfläche zur Verfügung zu stellen, bei dem im montierten Zustand des Haltenetzes bzw. des Netzteils ein gleichmäßigeres Maschenbild erzielt wird und Durchhänge an den Rändern weitestgehend vermieden werden.

Diese Aufgabe wird erfindungsgemäß dadurch gelöst, dass die Netzmaschen im nicht montierten Zustand des Netzteils in den Randbereichen des Netzteils kleiner als in Zentralbereichen desselben sind, und dass die Netzmaschen im montierten Zustand des Netzteils in den Rand- und den Zentralbereichen desselben gleich groß sind. Erfindungsgemäß wird ein Maschenbild des Netzteils erreicht, bei dem die Netzmaschen in zentralen Bereichen des Netzteils und in Randbereichen desselben einander hinsichtlich ihrer Abmessungen entsprechen. Hierdurch wird ein weitestgehend gleichmäßiges Maschenbild des Netzteils des erfindungsgemäßen Haltenetzes erzielt. Da die Netzmaschen an den Rändern des Netzteils im unmontierten Zustand des Haltenetzes kleiner sind als in Zentralbereichen des Netzteils, wird im montierten Zustand des Netzteils bzw. des Haltenetzes erreicht, dass die kleineren Netzmaschen im Randbereich des Netzteils diesen lokalen Bereich des Netzteils bzw. Netzgeflechts stärker aussteifen als die größeren Maschen in den Zentralbereichen des Netzteils bzw. Netzgeflechts. Hierdurch wird eine erhebliche Reduzierung des Durchhangs an den Randbereichen des Netzteils bzw. des Netzgeflechts erzielt, wobei sich darüber hinaus ein gleichmäßigeres Maschenbild in der Fläche des Netzteils ergibt.

Erfindungsgemäß sind die Netzmaschen im nicht montierten Zustand des Netzteils von der Mitte in auswärtiger Richtung bis zum Rand desselben zunehmend kleiner ausgebildet sind und die Netzmaschen im montierten Zustand des Netzteils über das gesamte Netzteil gleich groß sind. Die Vorgabe für die Abmessungen der Netzmaschen erfolgt in Abhängigkeit von der Position der jeweiligen Netzmasche innerhalb des Netzteils bzw. des Netzgeflechts sowie denjenigen durch die Montage des Netzteils bzw. des Haltenetzes bedingten Parametern.

Gemäß einer vorteilhaften Ausführungsform des erfindungsgemäßen Netzteils sind die Netzmaschen des Netzteils bzw. des Netzgeflechts rautenförmig ausgebildet.

Das erfindungsgemäße Haltenetz kann als Bodennetz, als Rahmennetz, z.B. als Kunststoff- oder Drahtrahmennetz, als Leistennetz, z.B. als Kunststoffleistennetz, als Netz mit elastischem Rand, z.B. als Gummirandnetz, od.dgl. ausgebildet sein.

In einer Ausführungsform ist ein elastisches Netzteil eines erfindungsgemäßen Haltenetzes mit rautenförmig ausgestalteten Netzmaschen versehen. Diese rautenförmigen Netzmaschen werden durch zueinander geneigt verlaufende Strangscharen gebildet, die jeweils aus mehreren Netzsträngen bestehen.

Im nicht montierten Zustand des Netzteils bzw. des Netzgeflechts weist die mittig desselben angeordnete rautenförmige Netzmasche Abmessungen auf, die größer sind als die Abmessungen zu dieser Netzmasche benachbarter, weiter außen angeordneter Netzmaschen. Je weiter eine rautenförmige Netzmasche des Netzteils bzw. Netzgeflechts aus der Mitte zum Randbereich des Netzteils bzw. Netzgeflechts versetzt ist, desto kleiner sind ihre Abmessungen.

Das Verhältnis der Abmessungen zwischen den rautenförmigen Netzmaschen wird so gewählt, dass in Abhängigkeit vom Werkstoff des elastischen Netzteils, von den mit der Montage des Netzteils am Haltenetz bzw. des Haltenetzes an der Befestigungsfläche einhergehende Parameter berücksichtigt werden. Dies führt dazu, dass bei montiertem Netzteil bzw. montiertem Haltenetz das Maschenbild des Netzteils über das gesamte Netzteil weitestgehend gleichmäßig ist. Durchhänge an Randbereichen des Haltenetzes bzw. des Netzteils werden vermieden. Im montierten Zustand entspricht die Maschengröße der rautenförmigen Netzmaschen am Randbereich des Netzteils bzw. des Netzgeflechts der Abmessung der rautenförmigen Netzmasche im Zentralbereich des Netzteils bzw. Netzgeflechts.

Das erfindungsgemäße Haltenetz kann als Bodennetz, als Rahmennetz, z.B. als Kunststoff- oder Drahtrahmennetz, als Leistennetz, z.B. als Kunststoffleistennetz, als Netz mit elastischem Rand, z.B. als Gummirandnetz, oder in ähnlicher Weise ausgebildet sein.

Als Einsatzgebiet für die erfindungsgemäßen Haltenetze kommt insbesondere die Fahrzeugindustrie in Frage. Auch in Flugzeugen Schiffen od.dgl. können entsprechende Haltenetze eingesetzt werden.

## Patentansprüche

1. Haltenetz zur Montage an einer Befestigungsfläche, mit einem elastischen Netzteil, dessen Netzmaschen durch zueinander geneigt verlaufende, jeweils mehrere Netzstränge aufweisende Strangscharen gebildet sind, wobei die Netzmaschen im nicht montierten Zustand des Netzteils in den Randbereichen des Netzteils kleiner als in Zentralbereichen desselben sind, **dadurch gekennzeichnet, dass** die Netzmaschen im nicht montierten Zustand des Netzteils von der Mitte in auswärtiger Richtung bis zum Rand desselben zunehmend kleiner ausgebildet sind, und dass die Netzmaschen im montierten Zustand des Netzteils in den Rand- und Zentralbereichen desselben gleich groß sind.

2. Haltenetz nach Anspruch 1, bei dem die Netzmaschen des Netzteils rautenförmig ausgebildet sind.

3. Haltenetz nach Anspruch 1 oder 2, das als Bodennetz, als Rahmennetz, z.B. als Kunststoff- oder Drahtrahmennetz, als Leistennetz, z.B. als Kunststoffleistennetz, als Netz mit elastischem Rand, z.B. als Gummirandnetz, od.dgl. ausgebildet ist.

## Claims

1. A stowage net for installation on a mounting surface, with elastic netting, the meshes of which are formed by strand groups, running at an angle to one another, in each case having a plurality of netting strands, wherein in the uninstalled state of the netting the meshes in the edge regions of the netting are smaller than in the central regions of the same, **characterised in that** in the uninstalled state of the netting, the meshes are designed to be ever smaller from the centre in the outwards direction up to the edge of the same and in the installed state of the netting the meshes in the edge regions and the central regions of the same are of equal size.

2. The stowage net in accordance with claim 1, in which the meshes of the netting are designed to be of a diamond shape.

3. The stowage net in accordance with claim 1 or 2, which is designed as a floor net, as a frame net, e.g. as a plastic or wire frame net, as a strip net, e.g. as a plastic strip net, as a net with an elastic edge, e.g. as a rubber-edged net, or similar.

## Revendications

1. Filet de retenue destiné à un montage dans une surface de fixation et comportant un élément de filet élastique dont les mailles de filet sont constituées par plusieurs ensembles de cordons de filet orientés obliquement les uns par rapport aux autres et présentant respectivement plusieurs ensembles de cordons, en quoi les mailles du filet, à l'état non monté de l'élément de filet, sont plus petites dans les parties périphériques de l'élément de filet que dans les parties centrales **caractérisé en ce que** les mailles du filet, à l'état non monté de l'élément de filet, sont réalisées de plus en plus petites depuis le centre en direction de l'extérieur jusqu'à son bord et que les mailles du filet, à l'état monté de l'élément de filet, sont de même taille dans les parties périphériques de l'élément de filet et dans ses parties centrales.

2. Filet de retenue selon la revendication 1, dans lequel les mailles de filet de l'élément de filet sont réalisées en forme de losanges.

3. Filet de retenue selon la revendication 1 ou 2, qui se présente sous forme d'un filet de sol, d'un filet de cadre, par exemple sous forme d'un filet de cadre en plastique ou en fil de fer, sous forme d'un filet à baguettes, par exemple sous forme d'un filet à baguettes en plastique, sous forme d'un filet à bord élastique, par exemple sous forme d'un filet à bord en caoutchouc, ou similaires.
